# EUROPÄISCHE PATENTSCHRIFT

(11) **EP 2 591 873 B1**
(45) Veröffentlichungstag und Bekanntmachung des Hinweises auf die Patenterteilung: **17.09.2014**
(21) Anmeldenummer: 11306447.1
(22) Anmeldetag: 08.11.2011
(51) Int. Cl.: B23K 11/00, B23K 11/11, B23K 33/00, H01R 4/18, H01R 4/20, H01R 13/115, H01R 43/02

(54) **Verfahren zum Verschweißen eines elektrischen Leiters mit einem Kontaktelement**
Method of welding an electrical conductor with a contact element
Procédé de soudage d'un conducteur électrique avec un élément de contact

(43) Veröffentlichungstag der Anmeldung: 15.05.2013
(73) Patentinhaber: Nexans, 75008 Paris (FR)
(72) Erfinder: Riedel, Richard, 92685 Floß (DE)
(74) Vertreter: Döring, Roger

(56) Entgegenhaltungen:
- CA-A- 743 256
- JP-A- 6 104 019
- JP-A- 2002 015 792
- US-A- 2 888 662
- US-A- 2 935 727
- US-A1- 2007 004 263

## Beschreibung

Die Erfindung bezieht sich auf ein Verfahren zum elektrisch leitenden Verbinden eines flexiblen elektrischen Leiters mit einem starren Kontaktelement gemäß dem Oberbegriff des Patentanspruchs (JP 6104019 A).

Beispielsweise im Motorraum von Kraftfahrzeugen, insbesondere von Fahrzeugen mit elektrischem Antrieb oder mit einem Hybridantrieb, gibt es eine zunehmende Anzahl von Kontaktelementen, an welche elektrische Leiter angeschlossen werden müssen, und zwar nach Möglichkeit unter Einsatz von Robotern. Die Kontaktelemente sind starre Flachteile aus Metall mit etwa rechteckigem Querschnitt, die von außen zugänglich aus dem Gehäuse eines Gerätes, wie beispielsweise eines Elektromotors oder eines Magnetschalters, herausragen. Bei den an die Kontaktelemente anzuschließenden elektrischen Leitern handelt es sich nahezu ausschließlich um flexible isolierte Litzenleiter. Sie werden zum Verschweißen mit den Kontaktelementen an ihren Enden abisoliert und so verdichtet, daß sie eine kompakte Einheit bilden. Danach werden die Leiterenden an die Kontaktelemente angelegt und mit denselben verschweißt. Dabei kann es leicht geschehen, daß die Leiter aus einer vorgegebenen Lage herausrutschen, so daß keine brauchbare Schweißverbindung entsteht. Je größer die Anzahl der Kontaktelemente und der anzuschließenden Leiter ist, desto größer kann auch die Anzahl von fehlerhaften Verbindungen werden.

Die US 2007/0004263 A1 beschreibt ein Verfahren zum Herstellen eines hermetisch dichten elektrischen Anschlusses für einen motorisch betätigten Kompressor für eine Kühlanlage. Es wird bei diesem Verfahren ein Verbindungsblock verwendet, der mit Steckerstiften ausgerüstet ist. An jeden Steckerstift kann eine elektrische Leitung angeschlossen werden. Dafür wird ein nicht metallischer Adapter eingesetzt, dessen geometrische Form dem Verbindungsblock angepaßt ist und der eine der Anzahl der Steckerstifte des Verbindungsblocks entsprechende Anzahl von Löchern aufweist. In diese Löcher werden Kontaktelemente eingesetzt, die an den Enden von elektrischen Leitern angebracht sind. Die Kontaktelemente sind dreieckig ausgeführt. Sie umschließen einen relativ großen Raum, der geeignet ist, Steckerstifte mit unterschiedlichen Durchmessern aufzunehmen. Ein mit allen vorgesehenen Kontaktelementen fertig bestückter Adapter wird auf den Verbindungsblock aufgeschoben, wobei alle Kontaktelemente gleichzeitig auf je einen Steckerstift aufgesteckt werden.

Aus der eingangs erwähnten JP 6104019 geht ein Verfahren zum elektrisch leitenden Verbinden eines flexiblen elektrischen Leiters mit einem starren Kontaktelement aus Metall mittels eines Verbinders hervor. Der aus elektrisch leitendem Material bestehende Verbinder hat ein erstes zum Verbinden mit dem Leiter geeignetes Ende und ein mit demselben verbundenes zweites Ende mit einem als etwa U-förmige Klammer ausgeführten Befestigungselement. Der Verbinder wird zunächst mit seinem ersten Ende elektrisch leitend an dem Leiter angebracht. Danach wird das Befestigungselement auf das Kontaktelement aufgesteckt und abschließend mit dem Kontaktelement verschweißt.

Der Erfindung liegt die Aufgabe zugrunde, das eingangs geschilderte Verfahren so zu gestalten, daß fehlerhafte Schweißverbindungen ausgeschlossen werden können.

Diese Aufgabe wird entsprechend dem kennzeichnenden Merkmal des Patentanspruchs gelöst.

Der bei diesem Verfahren eingesetzte Verbinder ist einfach zu montieren und maßgenau auf ein Kontaktelement aufzustecken. Der Verbinder kann mit Vorteil an den Leiter angecrimpt werden, so daß ein Kompaktieren des abisolierten Leiterendes nicht erforderlich ist. Das zum Verbinder gehörende Befestigungselement kann von Hand aber ohne Probleme auch automatisch auf ein Kontaktelement aufgesteckt werden, und zwar in genau der für den abschließenden Schweißvorgang vorgegebenen Position. Das Verschweißen von Befestigungselement und Kontaktelement kann dann ebenfalls automatisch durchgeführt werden, und zwar mit großer Sicherheit dafür, daß auch bei einer größeren Anzahl von Kontaktelementen alle vorgesehenen Schweißverbindungen einwandfrei fertiggestellt werden.

Das Verfahren nach der Erfindung wird anhand der Zeichnungen als Ausführungsbeispiel erläutert.

Es zeigen:
Fig. 1 das Ende eines isolierten elektrischen Leiters.
Fig. 2 und 3 zwei unterschiedliche Ansichten eines elektrischen Kontaktelements.
Fig. 4 einen am Ende eines Leiters angebrachten Verbinder in schematischer Darstellung.
Fig. 5 und 6 einen Verbinder in zwei unterschiedlichen Ansichten in vergrößerter Darstellung.
Fig. 7 eine Verbindungsstelle zwischen einem Verbinder und einem Kontaktelement.

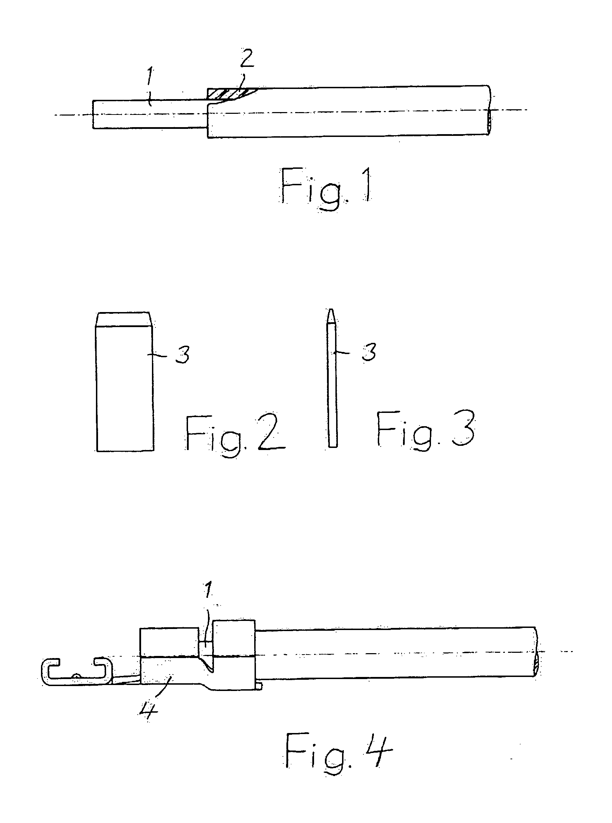

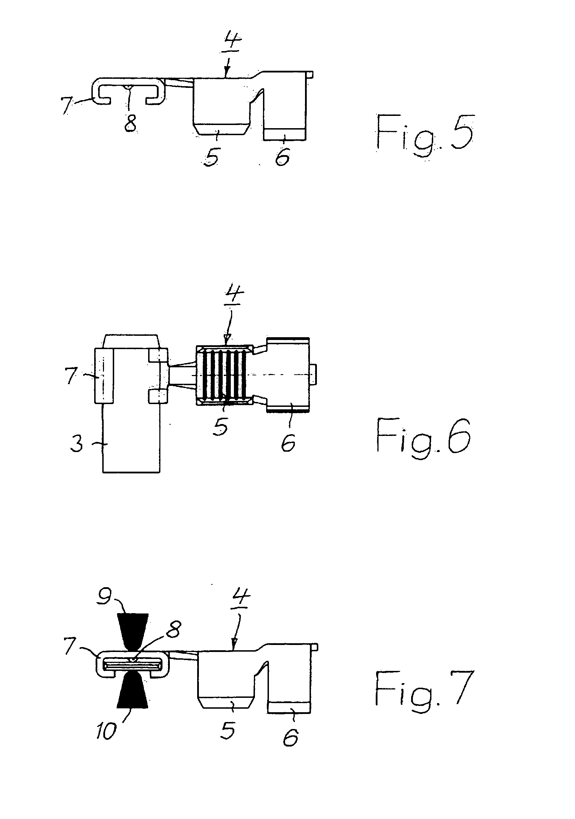

In den Fig. 1 bis 3 sind die Teile schematisch dargestellt, die mit dem Verfahren nach der Erfindung bearbeitet und miteinander verbunden werden sollen. Es wird dazu ein in den Fig. 5 und 6 dargestellter Verbinder 4 eingesetzt, der an einem Ende einen Crimpbereich zum Festlegen an einem flexiblen elektrischen Leiter 1 und am anderen Ende eine Klammer zum Aufstecken auf ein Kontaktelement 3 hat. Der Leiter 1 ist von einer Isolierung 2 umgeben. Er besteht mit Vorteil aus Kupfer und ist als Litzenleiter ausgeführt. An seinem Ende ist der Leiter 1 durch Entfernen der Isolierung 2 für Kontaktierungszwecke freigelegt. Das Kontaktelement 3, mit dem der Leiter 1 unter Einsatz eines Schweißvorgangs verbunden werden soll, ist gemäß den Fig. 2 und 3 ein flaches Bauteil aus Metall mit einem rechteckigen Querschnitt. Ein solches Kontaktelement gehört zu einem elektrischen Gerät und ragt aus einem Gehäuse desselben heraus. Der Verbinder 4 aus elektrisch leitendem Material ist entsprechend Fig. 4 an den Leiter 1 angeschlossen. Er soll mit dem Kontaktelement 3 verbunden werden.

Zum Verbinden des Leiters 1 mit dem Kontaktelement 3 wird der aus den Fig. 5 und 6 ersichtliche Verbinder 4 aus elektrisch leitendem Material eingesetzt. Er besteht mit Vorteil aus Bronze. Seine Oberfläche kann zur Verbesserung der Schweißbarkeit auch verzinnt sein. Der Verbinder 4 hat an seinem einen Ende einen Crimpbereich 5, mittels dessen er an den Leiter 1 angecrimpt werden kann, der durch den Crimpvorgang zusammengepreßt wird. Eine Lasche 6 des Verbinders 4 dient zu dessen zusätzlicher Festlegung auf dem mit der Isolierung 2 versehenen Bereich des Leiters 1.

An seinem dem Crimpbereich 5 abgewandten Ende hat der Verbinder 4 eine etwa U-förmig gebogene Klammer 7 mit lichten Abmessungen, die etwa den Abmessungen des Kontaktelements 3 entsprechen. Etwa zentral weist die Klammer 7 einen nach innen abstehenden Vorsprung 8 auf, der in Montageposition am Kontaktelement 3 anliegt.

Zur Durchführung des Verfahrens wird zunächst der Leiter 1 abisoliert. Danach wird der Verbinder 4 mit seinem Crimpbereich 5 an denselben angecrimpt, wobei gleichzeitig die Lasche 6 um die Isolierung 2 des Leiters 1 herumgelegt wird. Anschließend wird die Klammer 7 auf ein Kontaktelement 3 aufgesteckt und dort in vorgegebener Position durch Klemmung gehalten. Die Klemmung kann allein durch die Dimensionierung der lichten Weite der Klammer 5 bewirkt werden. Sie wird auf jeden Fall durch den Vorsprung 8 der Klammer 5 unterstützt, der in Montageposition gegen das Kontaktelement 3 drückt. Abschließend werden Klammer 7 und Kontaktelement 3 mittels zweier Schweißelektroden 9 und 10 miteinander verschweißt, die in Fig. 6 schematisch angedeutet sind.

Das Verfahren nach der Erfindung wird vollautomatisch durchgeführt. Das ist dann von besonderem Vorteil, wenn an einem elektrischen Gerät, wie beispielsweise einem Magnetschalter oder einem Elektromotor, eine größere Anzahl von Kontaktelementen 3 vorhanden ist. Die Positionen der Kontaktelemente 3 an einem elektrischem Gerät und ihre Ausrichtung liegen fest. Die entsprechenden räumlichen Koordinaten sind in einem elektronischen Steuermodul abgelegt und werden zur Steuerung von Robotern bzw. Automaten verwendet, welche die vorgesehenen Schweißverbindungen herstellen. Dabei besteht hier der besondere Vorteil, daß die an einer entsprechenden Anzahl von Leitern 1 angebrachten Verbinder 4 mit ihren U-förmigen Klammern 7 auf einfache Weise auf die unterschiedlichen Kontaktelemente 3 aufgesteckt werden können und auf denselben in einer genau vorgegebenen Position gehalten sind. Beim abschließenden Verschweißen der Klammern 7 der unterschiedlichen Verbinder 4 mit den Kontaktelementen 3 liegen für die Schweißelektroden 9 und 10 somit eindeutige, definierte Gegebenheiten vor, so daß alle vorgesehenen Schweißverbindungen störungsfrei hergestellt werden können.

## Patentansprüche

1. Verfahren zum elektrisch leitenden Verbinden eines flexiblen elektrischen Leiters mit einem starren Kontaktelement aus Metall, das einen etwa rechteckigen Querschnitt hat, unter Verwendung eines Verbinders (4) aus elektrisch leitendem Material, der ein erstes, zum elektrisch leitenden Verbinden mit dem Leiter (1) geeignetes Ende und ein mit demselben verbundenes zweites Ende mit einem als etwa U-förmige Klammer (7) ausgeführten Befestigungselement hat, das mit Klemmwirkung mit dem Kontaktelement (3) verbindbar ist, mit welchem der Verbinder (4) zunächst mit seinem ersten Ende elektrisch leitend an dem Leiter (1) angebracht wird, danach das Befestigungselement auf das Kontaktelement (3) aufgesteckt wird und abschließend das Befestigungselement mit dem Kontaktelement (3) verschweißt wird, **dadurch gekennzeichnet,**
- **daß** das Kontaktelement (3) als eines von einer größeren Anzahl von Kontaktelementen an einem elektrischen Gerät angebracht ist, wobei die Positionen aller Kontaktelemente an dem Gerät und ihre Ausrichtung festliegen,
- **daß** das Befestigungselement mit seiner U-förmigen Klammer (7) mit einer quer zur Längsrichtung des Verbinders verlaufenden Bewegung so auf das jeweilige Kontaktelement (3) aufgesteckt wird, daß es auf demselben in einer genau vorgegebenen, für den abschließenden, automatisch durchgeführten Schweißvorgang geeigneten Position angebracht ist, wobei die entsprechenden räumlichen Koordinaten der Kontaktelemente in einem elektronischen Steuermodul abgelegt und zur Steuerung von Robotern bzw. Automaten verwendet werden, welche die vorgesehenen Schweißverbindungen herstellen.

## Claims

1. Method for the electrically conducting connection of a flexible electrical conductor to a rigid contact element by use of a connector (4) which is connected to the conductor (1) with one end and which has at its other end a clamp (7) having a U-like profile which in mounting position is slipped on the contact element (3) and hold on the same by clamping, wherein the contact element is one of a greater number of contact elements which are fixed with prescribed positions to an electrical device, **characterized in**
- **that** the clamp (7) is positioned on the contact element (3) in a prescribed position for a final automatically practicable welding step, wherein the corresponding spatial coordinates of the contact elements are stored within a control modul for the controlling of robots or automats, which make the welding connections, and
- **that** finally the clamp is welded to the contact element (3).

## Revendications

1. Procédé pour relier de manière électriquement conductrice un conducteur électrique flexible à un élément métallique rigide de contact qui présente une section transversale sensiblement rectangulaire, par recours à un raccord (4) en matériau électriquement conducteur dont une première extrémité convient pour assurer la liaison électriquement conductrice avec le conducteur (1) et une deuxième extrémité est reliée à la première et est dotée d'un élément de fixation configuré comme pince (7) sensiblement en forme de U, qui peut être relié avec un effet de serrage à l'élément de contact (3) et par lequel le raccord (4) est d'abord placé de manière électriquement conductrice sur le conducteur (1) par sa première extrémité, l'élément de fixation étant ensuite enfiché sur l'élément de contact (3), l'élément de contact (3) étant placé sur un appareil électrique en tant qu'un parmi plusieurs éléments de contact, les positions de tous les éléments de contact sur l'appareil et leur orientation étant fixées,
**caractérisé en ce**
- **que** l'élément de contact est enfiché par sa pince (7) en forme de U par un déplacement transversal par rapport au sens de la longueur du raccord sur l'élément de contact (3) concerné de telle sorte qu'il est placé en une position prédéterminée de manière précise qui convient pour l'opération de soudage ultérieure réalisée automatiquement, les coordonnées spatiales de chacun des éléments de contact étant placées dans un module électronique de commande et étant utilisées pour commander des robots ou automates qui réalisent les liaisons soudées prévues, et
- **que** l'élément de fixation étant ensuite soudé sur l'élément de contact (3).
